# FASCICULE DE BREVET EUROPEEN

(11) **EP 0 974 446 B1**
(45) Date de publication et mention de la délivrance du brevet: **12.02.2003**
(21) Numéro de dépôt: 99202319.2
(22) Date de dépôt: 14.07.1999
(51) Int. Cl.: B29C 65/20

(54) **Machine de soudage d'objects creux et procédé pour souder ces objets**
Vorrichtung und Verfahren zum Verschweissen von hohlen Gegenständen
Apparatus and process for welding hollow parts

(30) Priorité: 22.07.1998 BE 9800550
(43) Date de publication de la demande: 26.01.2000
(73) Titulaire: Inergy Automotive Systems Research (SA), 1120 Bruxelles (BE)
(72) Inventeur: Coninck, Hubert, 7800 Ath (BE); Gilliard, Pierre, 1120 Bruxelles (BE); Op de Beeck, Joel, 2570 Duffel (BE); Van Meulebeke, Guy, 1160 Bruxelles (BE); Van Schaftingen, Jules-Joseph, 1300 Wavre (BE)
(74) Mandataire: Decamps, Alain René François

(56) Documents cités:
- EP-A- 0 210 679
- DE-A- 19 627 742
- DE-U- 9 213 424
- FR-A- 2 078 436
- FR-A- 2 660 594
- US-A- 2 384 014
- US-A- 2 665 738
- US-A- 3 053 726
- US-A- 3 391 045
- US-A- 3 828 413
- US-A- 3 919 034
- US-A- 5 240 536
- US-A- 5 296 075
- PATENT ABSTRACTS OF JAPAN vol. 009, no. 226 (M-412), 12 septembre 1985 (1985-09-12) -& JP 60 082329 A (MATSUSHITA DENKI SANGYO KK), 10 mai 1985 (1985-05-10)
- PATENT ABSTRACTS OF JAPAN vol. 013, no. 217 (M-828), 22 mai 1989 (1989-05-22) -& JP 01 034722 A (KYORAKU CO LTD), 6 février 1989 (1989-02-06)
- PATENT ABSTRACTS OF JAPAN vol. 013, no. 555 (M-904), 11 décembre 1989 (1989-12-11) -& JP 01 229616 A (KOBAYASHI KOGYO KK), 13 septembre 1989 (1989-09-13)

## Description

La présente invention concerne une machine pour le soudage d'objets creux en matière plastique.

Elle concerne plus précisément une machine pour la réalisation d'au moins un assemblage selon la technique du miroir chauffant.

La fabrication d'objets de formes complexes fait souvent appel à des techniques d'assemblage d'objets élémentaires plus petits qu'il est plus aisé de réaliser dans un appareillage moins élaboré et de dimensions plus petites que celui qui serait requis pour fabriquer l'objet complet.

L'utilisation des matières plastiques a permis, grâce à leurs excellentes propriétés de mise en forme et d'usinage la conception et la réalisation de pièces et d'objets finis aux formes les plus variées et les plus complexes, dépassant le plus souvent de loin la versatilité des métaux et des matières naturelles. A mesure que la complexité des objets fabriqués à partir de ces matières plastiques augmentait, s'est cependant fait sentir malgré tout la nécessité de procéder par assemblage de pièces ou d'objets plus petits et moins complexes afin de faciliter le processus de fabrication et d'en diminuer le coût. Par ailleurs, on rencontre de manière croissante le besoin de pouvoir intégrer, plus facilement que par les méthodes traditionnelles, des éléments accessoires à l'intérieur des objets.

Ces considérations s'appliquent particulièrement au domaine des objets creux qui doivent répondre à des exigences de forme et d'encombrement complexes, tels que ceux qui sont utilisés dans les domaines et applications de haute technicité les plus divers. En bonne place parmi ces objets on rencontre les tubes et canalisations de forme complexe devant tenir dans des espaces confinés ainsi que les flacons et réservoirs qui doivent se loger dans des espaces de contours les plus divers et complexes.

Les matières plastiques sont souvent utilisées pour la fabrication de tels objets creux. Lorsque la sophistication de leur surface externe est élevée, on a parfois recours à des techniques d'assemblage de plusieurs éléments plus simples à fabriquer. Une technique favorite dans le cas de matières plastiques permet d'obtenir des corps creux complexes par soudage d'objets plus petits et plus simples.

Le soudage d'objets creux en matière plastique nécessite la fusion locale de la matière à l'endroit des lèvres de soudure suivie du pressage des objets à souder jusqu'au retour à l'état solide de la matière des lèvres sous l'effet du refroidissement. L'apport de chaleur requis pour fondre la matière plastique à partir de la surface des lèvres se fait par différents procédés qui comprennent la génération de calories, notamment par l'effet d'ultrasons, par le frottement, par le rayonnement infrarouge ou par conduction à partir d'un outil chauffé.

Une technique par conduction s'est bien développée : la technique du soudage par outil chauffant appliqué sur les lèvres de soudure, dénommée technique du miroir chauffant ("hot plate").

Le brevet britannique 1601468 décrit un procédé et un appareil pour souder au moyen d'un miroir chauffant des demi-boîtes parallélipipédiques rectangulaires en matière plastique variée dont une face manque afin d'obtenir une boîte fermée. La technique est adaptée à la réalisation de boîtes facilement déformables dont l'épaisseur est faible par rapport aux autres dimensions de l'objet. Les demi-boîtes à souder sont fixées chacune à l'intérieur d'un moule et on applique les parois contre la surface interne du moule afin de faire correspondre parfaitement les deux demi-boîtes et de présenter au soudage des lèvres rigoureusement parallèles.

Lorsque l'assemblage à réaliser est de taille et de forme telles que la plus grande dimension du miroir chauffant est considérable, les machines de soudage connues sont de dimensions énormes et nécessitent une très longue distance de déplacement du miroir et, partant, une durée de cycle de soudage très longue aussi. Il en résulte des pertes de calories dues au refroidissement du miroir qu'il faut compenser par des moyens de réchauffage lorsque celui-ci est en place ou par chauffage initial à température plus élevée.

Par ailleurs, lorsque la complexité des formes de l'assemblage à réaliser est élevée, il est souvent très difficile de concevoir des objets élémentaires de forme relativement simple qui pourraient reconstituer l'assemblage complexe après soudage. Un corollaire en est que les miroirs chauffants requis sont aussi très complexés.

On connaît aussi le brevet US-A-3391045 qui est le document de la technique connue le plus proche qui divulgue un procédé pour assembler deux corps creux en matière plastique par soudage comprenant une mise à dimension des corps à souder par alignement des bords de ces corps et mise en forme par plaquage sur les parois d'une cavité enserrant chaque objet (col. 4, lignes 3-27 et col. 5, lignes 36-40) puis soudage des deux corps creux par pressage des corps mis en forme sur deux lames distinctes chauffées par un dispositif de chauffage par conduction de manière à fondre la totalité de la surface dès bords, ensuite ouverture et enlèvement des deux lames selon un mouvement plan, conjoint et de sens contraire, fermeture et pressage des bords des corps creux chauffés l'un contre l'autre pour réaliser la soudure (col. 5, ligne 47 à col. 6, ligne 1).

Le brevet US-A-5240536 divulgue un procédé de fabrication d'un aileron aérodynamique par soudure de deux coquilles creuses en matière plastique maintenues dans des moules ouverts qui se font face au moyen d'une pièce chauffante unique non plane épousant la forme de l'aileron selon sa plus grande dimension et venant s'insérer entre les deux moules. Ceux-ci sont ensuite pressés sur la pièce chauffée, puis la pièce chauffée est retirée et les deux moules pressés l'un contre l'autre de manière à souder la totalité des bords des coquilles et former un aileron fermé et creux (figures 9 à 15 et revendication 1).

Le brevet US-A-3053726 divulgue un procédé d'assemblage des bords minces de deux récipients en matière plastique par la technique de la soudure à chaud par pressage sur les deux faces d'une pièce chauffée unique, les récipients étant ensuite pressés l'un contre l'autre afin de souder la totalité de leurs bords. Les opérations de pressage se font en emprisonnant les récipients dans des gabarits équipant chaque partie de la presse et chargés de maintenir inchangée la forme des récipients pendant les opérations de pressage (figure 5 et revendication 1).

La demande de brevet allemand DE-A1-19627742 divulgue un procédé de fabrication d'un réservoir à carburant en matière plastique par soudage au miroir chauffant de deux coquilles préalablement formées au moyen d'un procédé par injection comprenant des éléments d'écartement fixés sur le côté intérieur des coquilles de manière telle que celles-ci soient guidées uniformément et correctement lors de l'opération de pressage de ces coquilles l'une sur l'autre, après que leurs bords aient été chauffés préalablement par contact avec les deux faces du miroir.

L'invention a pour but de fournir une machine de soudage d'objets creux en matière plastique qui ne présente pas les inconvénients des machines connues. En particulier, elle concerne des machines plus économiques de plus petite taille, plus simples, de temps de cycle plus court et qui permettent l'introduction plus facile d'accessoires à l'intérieur des assemblages.

A cet effet l'invention concerne une machine de soudage d'objets creux en matière plastique tel que presentée dans la revendication 1.

Par soudage, on entend désigner l'opération d'assemblage d'au moins deux objets qui comporte une étape de fusion réalisée à partir d'au moins une portion de la surface de chaque objet, une étape de mise en contact des objets et une dernière étape de refroidissement jusqu'au retour vers l'état solide de la matière fondue, en vue de l'obtention d'un assemblage d'objets composite qui se comporte, du point de vue de la mécanique, comme un objet unique.

Les objets à souder peuvent être de nature différente ou de même nature. En particulier, les objets à souder peuvent comprendre des produits purs, des compositions chimiques, des matériaux composites, des alliages ou des substances naturelles, seules ou en mélange.

Tous les types de matière plastique peuvent convenir. Des matières plastiques convenant bien appartiennent à la catégorie des matières thermoplastiques.

Les matières thermoplastiques de synthèse sont préférées. Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire. En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres de verre, les fibres naturelles ou polymériques. Il est également possible d'utiliser des structures multicouches constituées de couches comprenant au moins un des polymères ou copolymères décrits supra.

La machine de soudage selon l'invention convient pour la réalisation de soudages par points, ou en des zones non contiguës de la surface des objets à souder. Elle convient aussi pour la réalisation d'un soudage continu sur la totalité de la surface de contact des objets à souder.

L'opération de soudage peut s'effectuer, dans la machine selon l'invention, par apport de matière nouvelle supplémentaire par rapport à celle des objets à souder. Dans le cas de matières thermoplastiques, on utilise de préférence comme matière nouvelle, une matière comprise dans au moins un des objets à souder.

L'opération de soudage peut aussi s'effectuer sans apport de matière nouvelle, par simple interpénétration de matière à l'endroit des surfaces soudées. La machine de soudage conforme à l'invention convient tout particulièrement bien pour le soudage sans apport de matière nouvelle.

La machine de soudage selon l'invention réalise des assemblages d'objets creux en matière plastique. Par objets creux, on désigne tout objet dont la surface présente au moins une partie vide ou concave. En particulier, la machine selon l'invention est bien adaptée au soudage d'objets creux qui se présentent sous la forme de coquilles en matière plastique que l'on soude bords à bords.

On peut souder plus de deux objets en matière plastique avec la machine selon l'invention. De préférence, on soude deux objets.

La machine selon l'invention permet de réaliser simultanément au moins un assemblage en matière plastique.

La technique du miroir chauffant mise en oeuvre par la machine selon l'invention est basée sur le principe de la fusion locale des parties de surfaces à souder, par contact au moyen d'un outil chauffé appelé miroir ou miroir "chaud". Celui-ci sera réalisé dans un matériau résistant à la chaleur et dont la rugosité de surface est très faible, afin de maximiser le contact avec la matière plastique à fondre. Tous les matériaux qui ont une bonne capacité calorifique et qui peuvent être usinés jusqu'au poli miroir conviennent. Il est cependant nécessaire qu'ils soient en outre inertes chimiquement vis-à-vis de la matière plastique à souder et qu'ils n'adhèrent pas à cette dernière. Parmi les matériaux possibles pour les miroirs, on peut citer, de manière non limitative, les métaux polis et les céramiques.

Des miroirs chauds en métal poli conviennent bien. On utilise des métaux polis mécaniquement ou polis chimiquement. On peut aussi déposer sur la surface des miroirs une pellicule lisse de matière par voie physique ou chimique.

Une solution intéressante au problème de l'adhérence du miroir chaud est, en variante, de recouvrir celui-ci d'une gaine en matière plastique résistante à la chaleur et inerte par rapport à la matière des objets à souder. Des exemples de telles matières plastiques sont les polymères fluorés tels que le polytétrafluoréthylène et le fluorure de polyvinylidène. Des miroirs métalliques recouverts d'un film de fluorure de polyvinylidène ont été employés avec succès.

La machine comporte aussi des moyens de chauffage du miroir chaud. Tout type de chauffage qui peut être mis en oeuvre dans une machine de traitement d'objets en matière plastique peut être envisagé. On peut ainsi transmettre de la chaleur au miroir chaud par conductibilité, par convexion ou par rayonnement, ou encore générer directement la chaleur au sein du miroir par des techniques électro-magnétiques.

Dans la machine, le miroir chaud peut, par exemple, être réchauffé par contact avec une résistance électrique elle-même chauffée par effet Joule. Il peut aussi, en variante, être plongé dans un courant d'air chaud chauffé par contact direct avec une flamme vive ou encore, plongé dans un bain liquide maintenu à haute température. Une autre variante possible est de le plonger dans une cavité dont les parois sont à haute température. Une variante supplémentaire comporte le chauffage du miroir par induction électrique dans un champ magnétique alternatif ou encore le chauffage du miroir par plongée dans un liquide aqueux au sein d'un champ de micro-ondes.

La machine selon l'invention comprend avantageusement des moyens de maintien des objets à souder. Les moyens de maintien des objets sont ceux qui reçoivent et supportent face à face les objets qui subissent l'opération de soudage. Ils sont généralement réalisés sous forme de plateaux munis de dispositifs d'ancrage des objets.

Dans la machine selon l'invention, on trouve aussi des moyens de positionnement des objets à souder. Ces moyens permettent d'ajuster de manière précise le rapprochement face à face des lèvres de soudure des objets. Ils permettent le positionnement de ces lèvres à une distance de séparation la plus faible compatible avec la possibilité d'encore venir intercaler un miroir chaud dans le faible intervalle de séparation. Avantageusement, ils sont aussi capables de régler le positionnement des objets dans l'espace pour que les lèvres de soudure se correspondent au mieux sur la totalité de leur longueur. Tout système de positionnement de précision peut convenir. En particulier, des systèmes à crémaillère ou à vérins peuvent être incorporés dans la machine afin de pouvoir rapprocher les objets à souder de manière très précise.

Par lèvres de soudure, on entend désigner les parties de la surface des objets creux qui sont chauffées au moyen du miroir et mises en contact pour le soudage des objets.

En particulier, les moyens de positionnement comprennent avantageusement des moyens de manipulation des objets à souder. Par manipulation, on entend l'amenée des objets creux dans la machine. De préférence, la manipulation des objets comprend aussi le retrait de l'assemblage de la machine après soudage. L'amenée et le retrait des objets creux dans la machine peut par exemple se faire par chargement direct de la machine à l'aide d'un robot ou par un opérateur. Ils peuvent aussi s'effectuer par transfert d'une palette porte-objet à partir d'un ou plusieurs postes de chargement/déchargement extérieur à la machine.

Les moyens de positionnement peuvent être réalisés sous différentes formes pratiques comprenant, non limitativement, un robot, une bande transporteuse, une chaîne, une courroie, des rouleaux entraînés, des guides et tunnels par gravité ou sous l'impulsion d'un fluide propulseur.

Dans le but d'améliorer la précision du positionnement et du déplacement des objets, on peut munir les moyens de positionnement d'un ou plusieurs asservissements comprenant des capteurs associés à un servo-régulateur de position. Ce dernier peut indifféremment appartenir à la catégorie des régulateurs pneumatiques ou à celle des régulateurs électroniques, en particulier ceux qui comprennent des éléments de logique programmée tels que les automates programmables ou les systèmes à micro-ordinateurs comprenant au moins un microprocesseur et un programme enregistré sur un support adéquat.

La machine conforme à l'invention doit aussi comprendre des moyens de déplacement du miroir. On entend par là des moyens connus pour intercaler les miroirs entre les lèvres de soudure avant l'opération de soudage. Cette machine doit aussi comprendre des moyens pour retirer le miroir lorsqu'il a terminé de chauffer les lèvres de soudure jusqu'à ce que celles-ci amorcent leur fusion à partir de leur surface. Les moyens pour intercaler le miroir entre les lèvres de soudure et ceux pour retirer le miroir après chauffage de celles-ci peuvent être uniques ou distincts. De préférence, on utilise les mêmes moyens pour intercaler le miroir et pour le retirer après chauffage des lèvres.

La machine selon l'invention comprend aussi des moyens de pression des objets sur le miroir ainsi que de pression des objets entre eux. Tout moyen apte à pouvoir maintenir des objets en contact sous l'effet d'une pression donnée peut convenir. On peut, par exemple, équiper des plateaux porte-objets de systèmes de vérins hydrauliques ou pneumatiques ou de systèmes vis-écrou capables d'imprimer de manière durable une pression-suffisante aux objets en contact. Par pression suffisante, on désigne une pression au moins égale à celle qui permet l'interpénétration de matière plastique fondue sur toute la surface des lèvres. Cette pression doit cependant rester inférieure à une certaine limite compatible avec l'absence de déformation mécanique des parties non fondues des objets en contact et la perte par écoulement dans une direction perpendiculaire à la direction de pressage d'une partie excessive de matière fondue.

Selon l'invention, le miroir se présente en au moins trois éléments distincts destinés à chauffer une portion seulement des lèvres de soudure des objets. Le miroir est donc un ensemble composite d'éléments distincts. Par éléments distincts on désigne des fragments de miroir qui possèdent chacun les mêmes caractéristiques que le miroir lui-même, hormis la surface qui est plus petite. Le nombre et les formes des éléments sont tels qu'il existe au moins une manière de placer tous les éléments les uns par rapport aux autres qui permette de reconstituer le miroir composite.

Les éléments de miroir peuvent aussi comporter, en variante, des moyens pour l'accrochage aux éléments de miroir adjacents de façon à rigidifier le miroir composite reconstitué et à lisser sa surface.

Le miroir comprend de 3 à 8 éléments distincts.

Chacun des éléments du miroir peut être identique à tous les autres en ce qui concerne la nature et la forme. En variante, certains éléments du miroir peuvent différer dans leur nature ou dans leur forme. Dans une autre variante, certains éléments du miroir diffèrent à la fois dans leur nature et dans leur forme.

Les éléments distincts du miroir de la machine selon l'invention doivent pouvoir être déplacés de manière distincte.

En particulier, ils peuvent être déplacés dans des plans distincts. Ils peuvent aussi être déplacés dans des directions distinctes. Ils peuvent enfin être déplacés dans le même sens ou dans des sens opposés. Alternativement, deux éléments quelconques du miroir peuvent être déplacés de manière distincte suivant un seul des trois critères plan, direction et sens. Ils peuvent aussi être déplacés de manière distincte selon deux de ces trois critères, ou les trois. De préférence, au moins deux éléments de miroir peuvent toutefois être déplacés de manière identique.

Selon une forme de réalisation particulière de la machine selon l'invention, lorsque le miroir est en position de chauffage des lèvres de soudure des objets à souder, les éléments distincts sont disposés de manière adjacente et recouvrent la totalité des lèvres de soudure des objets. Dans ce cas, les éléments de miroir se touchent et recomposent un miroir unique. La surface de celui-ci peut cependant être inférieure à celle qu'aurait nécessité un miroir non fractionnable en éléments multiples.

La machine de soudage selon l'invention peut comporter des éléments de miroir qui sont tous plans.

En variante, elle peut aussi comporter des éléments de miroirs dont au moins l'un d'entre eux n'est pas plan. Dans ce cas, le soudage d'objets qui présentent des lèvres de soudure de forme non plane est facilité.

Selon une autre variante, la machine selon l'invention peut comporter des moyens de chauffage local des objets à souder autres que les miroirs chauds destinés à chauffer les lèvres de soudure. Ces moyens peuvent permettre le réchauffement d'autres zones des objets à souder que les lèvres de soudure. Un exemple de tels moyens sont des sources de rayonnement infrarouge. Celles-ci peuvent être présentes à l'intérieur de la machine selon l'invention. Comme exemple de telles sources, on peut citer les lampes à rayonnement infrarouge. La machine de soudage décrite supra permet de fabriquer aisément des objets complexes en un temps plus court et avec une moindre consommation d'énergie que par les procédés classiques.

Dès lors, l'invention concerne aussi un procédé pour souder des objets creux en matière plastique au cours d'un cycle de soudage tel que présenté dans la revendication 4.

Tous les termes utilisés dans la phrase précédente ont la même définition que celle qui en a été donnée dans la description de la machine supra.

Par cycle de soudage, on désigne en outre l'ensemble des opérations nécessaires à la fabrication d'au moins un assemblage complet résultant du soudage d'au moins deux objets creux. Les opérations du cycle peuvent être reproduites à volonté dans un ordre inchangé pour produire un grand nombre d'objets identiques à ceux obtenus à l'issue du premier cycle.

Conformément au procédé selon l'invention, la température des éléments de miroir chaud doit être suffisante pour pouvoir fondre par contact la matière plastique à souder. La température des éléments de miroir doit être soigneusement adaptée à la nature de la matière plastique utilisée. Il importe cependant que cette température ne soit pas exagérément élevée afin, d'une part, de ne pas décomposer la matière plastique à l'endroit des lèvres de soudure mis en contact avec ces éléments de miroir et, d'autre part, pour ne pas provoquer la fusion d'une trop grande quantité de matière plastique. En pratique, on choisit une température inférieure à la température qui produit la décomposition de la matière plastique pour la durée du cycle de soudage choisie.

Il est par ailleurs souhaitable que la température des éléments de miroir chaud se maintienne à un niveau élevé supérieur à la température de fusion pendant toute la durée de contact avec les lèvres de soudure.

De même, le temps de pression des objets sur les éléments de miroir chauds doit être réglé pour au moins amorcer la fusion des objets à partir de la surface des lèvres, tout en limitant les risques de fusion d'une trop grande quantité de matière.

De préférence, on veille à ce que la fusion de matière qui débute à partir de la surface des lèvres ne s'étende pas, perpendiculairement à celle-ci, sur une profondeur supérieure à l'épaisseur des objets à souder.

Les températures, durées de pressage et pressions exercées sur les éléments de miroir chaud peuvent être identiques pour tous les éléments de miroir. Alternativement, au moins un des paramètres température, pression et durée de pressage peut être différent pour au moins un élément de miroir par rapport au même paramètre de tous les autres éléments.

Dans une autre forme de réalisation du procédé selon l'invention, qui est préférée, on intercale en début de cycle, entre les étapes de positionnement des objets à souder et de déplacement des éléments de miroir chaud décrits plus haut, une étape de mise à dimension de ces objets, en vue de mieux faire correspondre les lèvres de la soudure.

Par mise à dimension, on entend désigner tout processus de modification de la courbure de la surface et/ou des dimensions des objets à souder de façon à améliorer et à optimiser la correspondance des lèvres de soudure de chaque objet avec celles de l'objet avec lequel il sera soudé.

De préférence, on réalise la mise à dimension selon les quatre étapes suivantes :
1 °) on déplace, de manière distincte, au moins deux éléments de miroir dont la température est inférieure à celle requise pour provoquer la fusion locale de la matière plastique des lèvres au contact des éléments de miroir (miroir "froid") et on les amène entre les lèvres de soudure de chaque objet qui se font vis-à-vis,
2°) on presse les objets sur les éléments de miroir froid avec une pression et pendant le temps nécessaires à déformer le profil des lèvres de soudure et ajuster au mieux leur correspondance,
3°) on écarte les objets des éléments de miroir froid,
4°) on retire les éléments de miroir froid.

La température des éléments de miroir froid doit rester suffisamment modérée pour éviter la fusion locale de la matière plastique avec laquelle ils sont mis en contact. Elle pourra cependant atteindre le niveau correspondant à celui du ramollissement de cette matière plastique. Par ramollissement, on entend la modification des caractéristiques physiques de la matière plastique dès qu'elle atteint et dépasse sa température H.D.T. ("Heat Deflection Temperature", mesurée selon la norme ISO N° 75). De préférence, la température des éléments de miroir froids peut prendre toute valeur commençant à ce point de ramollissement et se terminant à une valeur immédiatement inférieure à la température du début de la plage de fusion de la matière plastique considérée.

Dans une forme particulière de réalisation du procédé selon l'invention, on peut faciliter la déformation des objets à souder en créant au moins une zone de déformation préférentielle dans au moins un des objets, par exemple en variant localement l'épaisseur ou encore par l'insertion de plis déformables.

Un autre moyen de faciliter la déformation est de chauffer localement au moins une zone précise d'au moins un objet ou l'ensemble de celui-ci.

Un autre moyen de faciliter la déformation est encore de déformer localement au moins un des objets à l'aide d'un outil conformateur qui applique un effort perpendiculairement à celui déjà exercé par la presse.

Pour chaque matière plastique particulière, on optimise les paramètres de température des éléments de miroir froid ainsi que des pressions appliquées sur les objets et du temps requis pour obtenir un bon ajustage de la correspondance des lèvres et une mise à dimension adéquate. Pour chaque cas d'espèce, les meilleurs compromis pour la fixation des valeurs à attribuer à chacun de ces trois paramètres dépendra des propriétés mécaniques intrinsèques de la matière plastique considérée, de la forme des éléments de miroir ainsi que de la forme et de la dimension des objets à souder.

De manière similaire au cas des éléments de miroir chaud, les températures, durées de pressage et pression exercées sur les éléments de miroir froid peuvent être identiques pour tous les éléments de miroir. Alternativement, au moins un des paramètres température, pression et durée de pressage peut être différent pour au moins un élément de miroir froid par rapport au même paramètre de tous les autres éléments.

Contrairement à l'opération de pressage lors du soudage proprement dit, le pressage dans l'étape préliminaire de mise à dimension doit être effectué avec une pression suffisante pour déformer les objets.

Une variante intéressante du procédé selon l'invention, dans le cas de l'utilisation d'éléments de miroir froid est celle dans laquelle les éléments de miroir froid et les éléments de miroir chaud sont des zones distinctes des mêmes éléments de miroir.

Un autre mode de réalisation de l'opération de mise à dimension est celui dans lequel cette mise à dimension se fait par étirement ou compression des flancs des objets à souder ou par pressage de ces objets sur les parois d'un moule servant de gabarit. Lorsque les objets à souder sont eux-mêmes produits dans une autre machine située dans l'environnement proche de la machine de soudage, on peut réaliser cette mise à dimension des objets dès leur sortie de la machine de production. Le moule peut comprendre un cadre métallique. Un moule sous la forme de cadre métallique convient bien pour la mise à dimension d'objets immédiatement après leur fabrication, par exemple dans une machine d'injection.

On peut également combiner l'utilisation d'éléments de miroir froid et de compression ou d'étirement des objets dans un moule.

Dans l'un ou l'autre mode de réalisation de la mise à dimension, on peut aussi faciliter celle-ci par un réchauffement des pièces à mettre à dimension avant soudage. Le réchauffement peut se faire localement sur une ou des zones des objets judicieusement choisies. Un exemple de réchauffement local avant mise à dimension est celui qui peut être réalisé au moyen d'un rayonnement infrarouge, en visant la zone à réchauffer au moyen d'une source de rayonnement approprié focalisée sur la zone à réchauffer. Il peut, au contraire se faire globalement dans la masse des objets. Dans ce cas, un exemple simple est celui du conditionnement thermique des objets à réchauffer dans un four avant mise à dimension.

Dans une autre forme de réalisation du procédé selon l'invention, on peut aussi effectuer tout ou partie de la mise à dimension par pressage des objets sur les éléments de miroirs chauds, immédiatement avant l'opération de soudage. On peut, par exemple, imposer un profil de pression durant la période de pressage sur les éléments de miroirs chauds de façon à ce que la pression appliquée en début de période, pour la mise à dimension, soit différente de celle exercée par la suite, dès que la fusion de la matière plastique des lèvres a commencé et que l'opération de soudage commence.

Le procédé selon l'invention est bien adapté au soudage d'au moins deux objets creux en matière plastique pour fabriquer un réservoir. Il est particulièrement bien adapté à la fabrication de réservoirs à carburant. Il convient tout particulièrement bien pour la fabrication de réservoirs à carburants destinés à équiper les véhicules automobiles.

Le procédé selon l'invention est bien adapté au soudage d'au moins deux objets creux en matière plastique obtenus selon la technique de moulage par injection.

L'invention concerne également l'utilisation de la machine telle que décrite plus haut pour la réalisation de réservoirs en matière plastique par soudage d'au moins deux objets creux en matière plastique.

En particulier, elle concerne l'utilisation de cette machine pour la fabrication de réservoirs à carburant en matière plastique. Plus particulièrement encore, elle concerne la fabrication de réservoirs à carburant en matière plastique par soudage d'au moins deux objets creux en matière plastique obtenus selon la technique du moulage par injection.

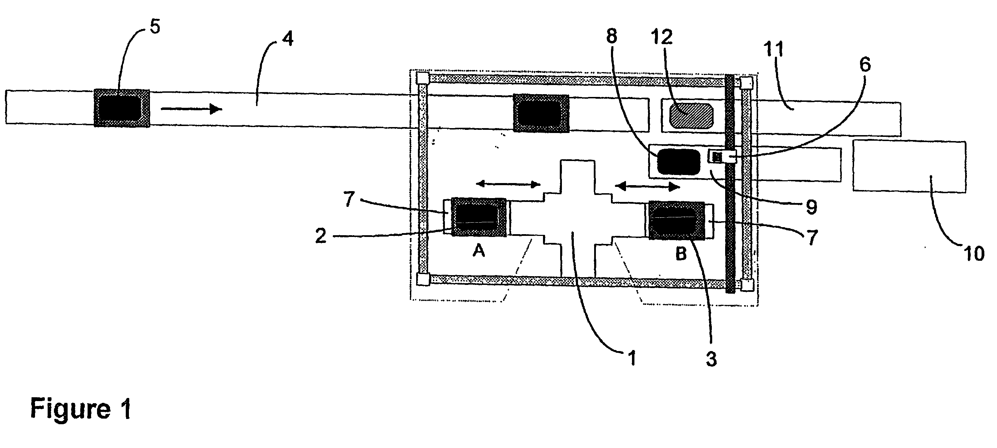

Les figures 1 à 3 annexées illustrent de manière non limitative certains modes de réalisation de la machine conforme à l'invention ainsi que du procédé utilisant une machine semblable pour fabriquer des réservoirs à carburant à partir d'objets creux en forme de coquilles obtenues par moulage par injection.

La figure 1 est une représentation schématique générale d'une machine de soudage selon l'invention qui illustre notamment les moyens de manipulation des objets à souder.

La figure 2 montre le détail d'une réalisation particulière des moyens de positionnement des objets ainsi que des éléments de miroir.

La figure 3 illustre schématiquement un cycle complet du procédé de soudage de deux objets creux comprenant une étape de mise à dimension par pressage contre des éléments de miroir froid.

La figure 1 représente une vue en plan d'une machine selon l'invention adaptée au soudage de deux coquilles creuses en matière plastique pour la réalisation de réservoirs à carburant pour véhicule automobile. Un corps (1) de machine comprend deux postes de chargement (2) et déchargement (3) et une bande transporteuse (4) qui amène deux coquilles (5) en matière plastique dans le périmètre d'un robot à portique (6). Celui-ci assure le chargement et le déchargement des coquilles (5) et leur dépôt sur des plateaux (7) disposés dans chacun des deux postes (2) et (3) référencés A et B sur la figure. Les postes A et B fonctionnent en alternance pour le chargement et le déchargement, un des postes étant en position de chargement pendant que l'autre est en déchargement. Ces opérations de chargement et déchargement sont concommitantes avec l'opération de soudage effectuée dans le corps (1).

Après soudage, le réservoir obtenu (8) est déchargé par le robot (6) sur le tapis roulant (9). Celui-ci amène le réservoir (8) en face d'un poste de contrôle et d'emballage (10). Un deuxième tapis roulant (11) est chargé de l'évacuation des rejets non-conformes (12).

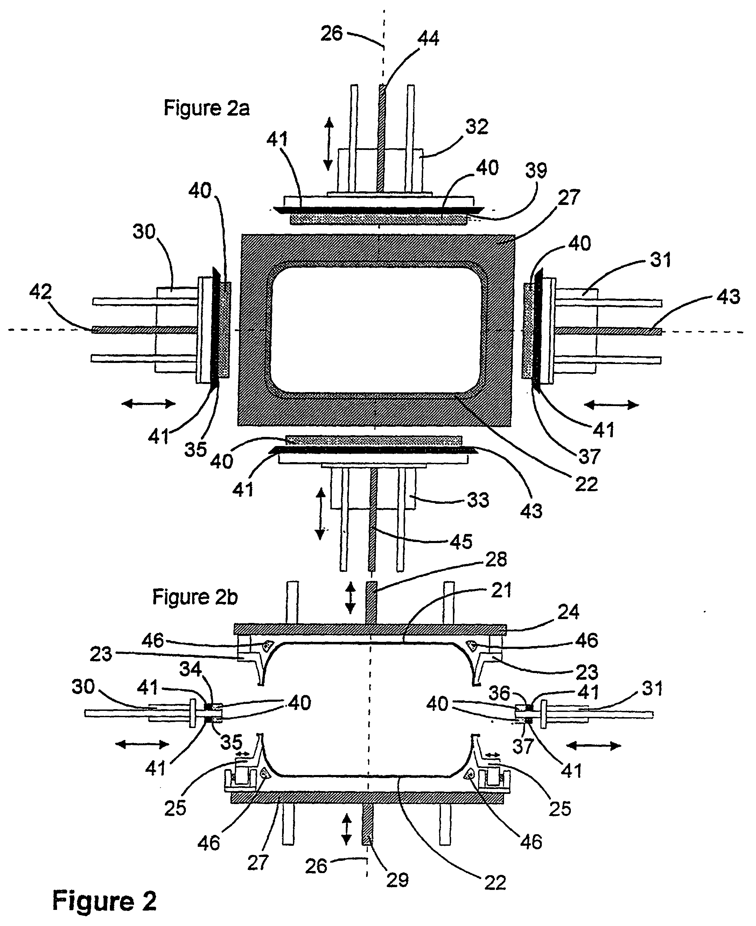

La figure 2 est une vue en plan (figure 2a) et en élévation (figure 2b) d'une coupe dans une partie d'une machine de soudage selon l'invention dans laquelle deux coquilles (21) et (22) en matière plastique sont soudées pour fabriquer un réservoir à carburant. La coquille supérieure (21) est pincée entre des bras fixes (23) de support portés par un plateau supérieur (24). La coquille inférieure (22) est pincée entre des bras (25) qui peuvent se mouvoir parallèlement au plateau au moyen d'un système à vérins, de façon conjointe et dans les mêmes direction et sens, de manière à pouvoir ajuster finement la position de l'axe (26) de la coquille inférieure (22) sur celui de la coquille supérieure (21). Les bras mobiles (25) sont, via le système à vérins, solidaires d'un plateau inférieur (27). Les plateaux supérieur (24) et inférieur (27) sont également solidaires d'autres vérins (28) et (29) qui assurent le positionnement vertical et le rapprochement des coquilles à souder. Quatre porte-miroirs (30 à 33) situés sur le pourtour des plateaux (24) et (27) à une hauteur située dans l'espace délimité par ceux-ci portent chacun deux éléments de miroir (34 à 39). Chacun de ces éléments de miroir comporte une partie froide (40) située vers le centre des coquilles (21) et (22) et une partie chaude (41) située vers l'extérieur de celles-ci. Des vérins de précision (42 à 45) assurent le déplacement ainsi que le positionnement fin des éléments de miroir (34 à 39). Des lampes infra-rouge (46) sont disposées dans les interstices laissés libres à proximité des bras (25).

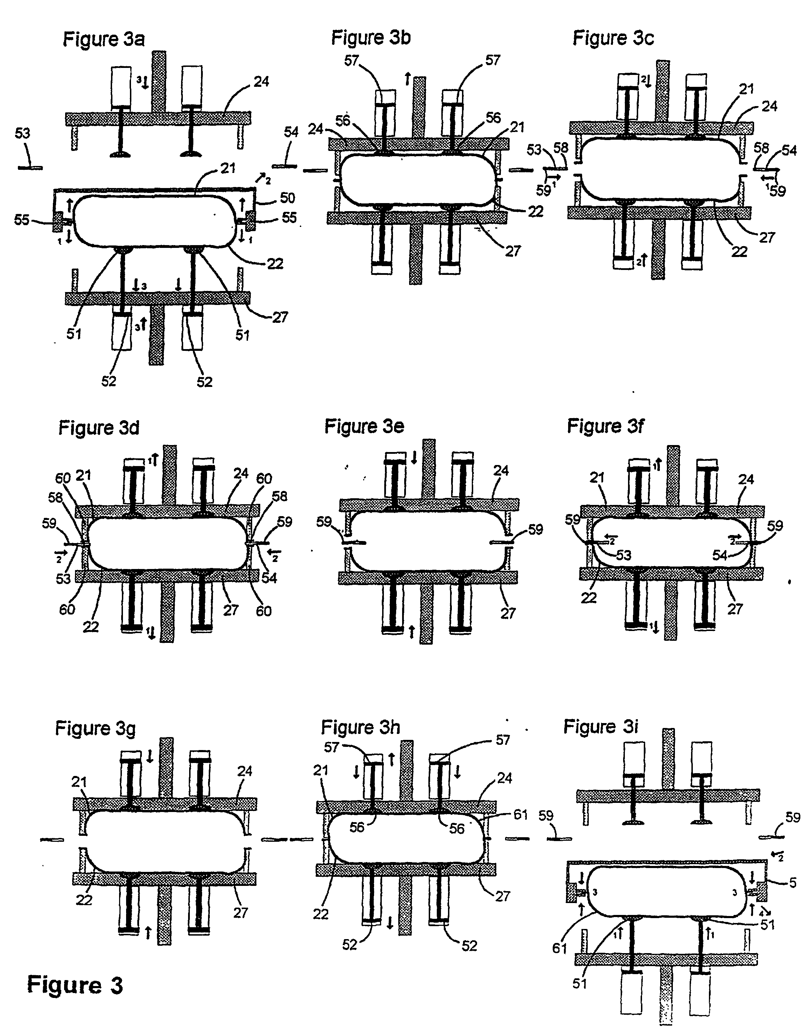

La figure 3a montre l'intérieur d'une machine de soudage selon l'invention au début d'un cycle, lorsque les plateaux (24) et (27) se trouvent dans leur position la plus écartée et que le robot (50) introduit dans la machine deux coquilles (21) et (22) en matière plastique et les dépose sur les ventouses *(51)* garnissant l'extrémité de pistons hydrauliques (52). A ce moment, les éléments de miroir (53) et (54) se trouvent dans une position écartée, en-dehors du champ des plateaux (24) et (27). Lorsque les ventouses (51) se sont solidarisées avec la coquille inférieure (22), des pinces (55) solidaires du robot (50) supportant les coquilles et les maintenant l'une contre l'autre s'ouvrent et le robot (50) s'éloigne, abandonnant la coquille supérieure (21) posée sur la coquille inférieure (22). Ensuite, les plateaux (24) et (27) se rapprochent.

La figure 3b montre le schéma de la machine lorsque le plateau supérieur (24) a rejoint la coquille supérieure (21) et que les ventouses (56) des pistons hydrauliques supérieurs (57) ont solidarisé la coquille supérieure (21) avec le plateau supérieur (24). Le plateau inférieur (27) portant la coquille inférieure (22) s'est aussi déplacé vers le haut et les deux coquilles (21) et (22) se font face à très courte distance l'une de l'autre.

A la figure 3c, on voit que les plateaux (24) et (27) se sont écartés d'une distance calibrée suffisante pour permettre l'insertion des éléments de miroir (53) et (54) entre les lèvres de soudure. Ceux-ci se déplacent alors dans le même plan, en sens contraire en direction de l'axe des plateaux (24) et (27). Ils présentent chacun une partie froide (58) disposée vers l'axe des plateaux et une partie chaude externe (59) chauffée en permanence par résistance électrique noyée dans sa masse. Les éléments de miroir (53) et (54) s'arrêtent lorsque leur partie froide (58) se trouve située au droit des coquilles (21) et (22) en matière plastique.

Les plateaux (24) et (27) se referment ensuite sur les éléments de miroir froid (58) comme schématisé à la figure 3d. Une pression calibrée est ensuite appliquée sur les plateaux (24) et (27) afin de mettre en forme définitive les coquilles (21) et (22) et d'égaliser les lèvres de soudure. Des guides (60) imposent aux coquilles (21) et (22) leur forme définitive et font office de moule. Au bout d'une durée suffisante à la mise à dimension des coquilles (21) et (22), les plateaux (24) et (27) s'écartent à nouveau légèrement et les éléments de miroir (53) et (54) se remettent en mouvement de rapprochement dans le même plan. Ils s'arrêtent lorsqu'ils présentent cette fois leur zone chaude (59) au droit des coquilles (21) et (22), situation représentée à la figure 3e.

Les plateaux (24) et (27) se referment alors sur les éléments de miroir chaud (59), tel que schématisé à la figure 3f. Après avoir appliqué une pression calibrée sur les plateaux (24) et (27) le temps nécessaire à la fusion locale de la matière plastique à partir de la surface des lèvres de soudure, les plateaux (24) et (27) se rouvrent et les éléments de miroir (53) et (54) se remettent en mouvement inverse et s'éloignent l'un de l'autre dans le même plan jusqu'à se trouver hors du champ des coquilles (21) et (22), situation schématisée à la figure 3g.

Les plateaux (24) et (27) se rapprochent ensuite jusqu'à faire se toucher les lèvres de soudure des coquilles (21) et (22), situation représentée à la figure 3h.

Une pression calibrée est ensuite appliquée sur les plateaux (24) et (27) pendant le temps nécessaire à l'interpénétration de la matière plastique des lèvres et de leur retour subséquent vers l'état solide. Les plateaux (24) et (27) s'ouvrent ensuite en même temps que les pistons hydrauliques inférieurs (52) et supérieurs (57) détachent le réservoir assemblé (61) des plateaux (24) et (27). Dans le même temps, les ventouses supérieures (56) se détachent de la paroi supérieure du réservoir (61).

A la figure 3i, on voit alors le robot (50) se remettre en place et venir pincer le réservoir (61). Les ventouses inférieures (51) relâchent ensuite leur emprise et le réservoir (61) est alors emporté par le robot (50) hors du champ intérieur de la machine pour subir les opérations d'ébarbage et d'emballage (non représentées). Un nouveau cycle peut alors recommencer.

## Revendications

1. Machine de soudage d'objets creux (21), (22) en matière plastique pour la réalisation d'au moins un assemblage (61) selon la technique du miroir chauffant comprenant un miroir et des moyens de chauffage de ce miroir, des moyens de maintien et de positionnement (6), (7), (23), (24), (25), (27), (28), (29), (50), (51), (52), (56), (57) des objets à souder face à face de manière à pouvoir rapprocher des lèvres de soudure qui se correspondent à la surface de chaque objet, des moyens de déplacement (42), (43), (44), (45) du miroir entre les lèvres de soudure et des moyens de pression (28), (29), des objets (21), (22) sur le miroir, **caractérisée en ce que** le miroir se présente en trois à huit éléments distincts (41) destinés à chauffer une portion seulement des lèvres de soudure des objets (21), (22) et aptes à être déplacés de manière distincte.

2. Machine de soudage selon la revendication 1, **caractérisée en ce que** les éléments distincts (41) qui constituent le miroir sont disposés de manière adjacente et recouvrent la totalité des lèvres de soudure des objets lorsque le miroir est en position de chauffage de ces lèvres.

3. Machine de soudage selon la revendication 1, **caractérisée en ce qu'**au moins un des éléments (41) de miroir n'est pas plan.

4. Procédé pour souder des objets creux (21), (22) en matière plastique au cours d'un cycle de soudage selon lequel
a) au début du cycle, on positionne au moins deux objets (21), (22) à souder de façon à présenter leurs lèvres de soudure face à face,
b) on déplace, de manière distincte, de trois à huit éléments (41) de miroir chaud et on les amène entre les lèvres de soudure de chaque objet (21), (22) qui se font vis-à-vis, la température des éléments de miroir étant suffisante pour pouvoir fondre par contact la matière plastique à souder,
c) on presse les objets sur les deux faces des éléments (41) de miroir chaud, pendant un temps au moins suffisant pour amorcer la fusion des objets à partir de la surface des lèvres en contact avec les miroirs chauds,
d) on écarte les objets (21), (22) des éléments (41) de miroir,
e) on retire ceux-ci,
f) on presse les objets (21), (22) les uns contre les autres de façon à mettre en contact les lèvres chauffées, pendant le temps nécessaire au soudage et au retour vers la phase solide de la matière fondue,
g) on enlève l'assemblage (61) ainsi obtenu.

5. Procédé pour souder des objets creux (21), (22) en matière plastique selon la revendication 4, **caractérisé en ce qu'**on intercale entre les étapes a) et b) une opération de mise à dimension des objets (21), (22) à souder en vue de mieux faire correspondre les lèvres de la soudure.

6. Procédé selon la revendication 5, **caractérisé en ce que** la mise à dimension comprend les quatre étapes suivantes :
1°) on déplace, de manière distincte, au moins deux éléments (58) de miroir dont la température est inférieure à celle requise pour provoquer la fusion locale de la matière plastique des lèvres au contact des éléments de miroir (miroir "froid") et on les amène entre les lèvres de soudure de chaque objet (21), (22) qui se font vis-à-vis,
2°) on presse les objets (21), (22) sur les deux faces des éléments (58) de miroir froid avec une pression et pendant le temps nécessaire à déformer le profil des lèvres de soudure et ajuster au mieux leur correspondance,
3°) on écarte les objets (21), (22) des éléments (58) de miroir froid,
4°) on retire les éléments (58) de miroir froid.

7. Procédé selon la revendication 6, **caractérisé en ce que** les éléments (58) de miroir froid et les éléments (59) de miroir chaud sont des zones distinctes des mêmes éléments (41) de miroir.

8. Procédé selon la revendication 5, **caractérisé en ce que** la mise à dimension se fait par étirement ou compression des flancs des objets (21), (22) à souder ou par pressage de ces objets sur les parois (60) d'un moule servant de gabarit.

9. Procédé selon une quelconque des revendications 4 à 8, **caractérisé en ce qu'**on soude au moins deux objets creux (21), (22) en matière plastique injectés pour fabriquer un réservoir à carburant (61).

10. Utilisation de la machine selon une quelconque des revendications 1 à 3 pour fabriquer des réservoirs à carburant (61) en matière plastique par soudage d'au moins deux objets creux (21), (22) en matière plastique injectés.

## Patentansprüche

1. Vorrichtung zum Verschweißen von hohlen Gegenständen (21, 22) aus Kunststoff zur Herstellung zumindest eines Zusammenbaus (61) nach der Heißspiegeltechnik, mit zumindest einem Spiegel und Mitteln zum Erhitzen des Spiegels, Halte- und Positionierungsmitteln (6, 7, 23, 24, 25, 27, 28, 29, 50, 51, 52, 56, 57) für die einander gegenüberliegenden zu verschweißenden Gegenstände, derart, daß die der Oberfläche jedes Gegenstandes entsprechenden Schweißlippen dieser Gegenstände sich einander nähern können, Mitteln (42, 43, 44, 45) zum Bewegen des Spiegels zwischen die Schweißlippen und Druckmitteln (28, 29) zum Anpressen der Gegenstände (21, 22) an den Spiegel, **dadurch gekennzeichnet, daß** jeder Spiegel zwischen drei und acht gesonderte Elemente (41) aufweist, die dazu bestimmt sind, jeweils nur einen Teil der Schweißlippen jedes Gegenstandes zu erhitzen (21, 22), und befähigt sind, sich auf gesonderte Weise zu bewegen.

2. Schweißvorrichtung nach Anspruch 1, **dadurch gekennzeichnet, daß** die gesonderten Elemente (41), welche den Spiegel bilden, einander benachbart angeordnet sind und die Gesamtheit der Schweißlippen der Gegenstände bedecken, wenn der Spiegel sich in der Position zum Erhitzen der Lippen befindet.

3. Schweißvorrichtung nach Anspruch 1, **dadurch gekennzeichnet, daß** zumindest eines der Elemente (41) des Spiegels nicht ebenflächig ist.

4. Verfahren zum Verschweißen von hohlen Gegenständen (21, 22) aus Kunststoff in einem Schweißzyklus, demzufolge:
a) Am Beginn des Zyklus zumindest zwei zu verschweißende Gegenstände (21, 22) derart positioniert werden, daß ihre Schweißlippen einander gegenüberliegen.
b) Drei bis acht Elemente (41) des heißen Spiegels gesondert bewegt und zwischen die einander gegenüberliegenden Schweißlippen jedes Gegenstandes (21, 22) bewegt werden, wobei die Temperatur der Spiegelelemente ausreicht, um das zu verschweißende Kunststoffmaterial durch Berührung zu schmelzen.
c) Die Gegenstände auf die beiden Seiten der Elemente (41) des heißen Spiegels während einer Zeit angepreßt werden, die ausreicht, um die Fusion der Gegenstände ausgehend von der in Berührung mit den heißen Spiegeln stehenden Lippenfläche durchzuführen.
d) Die Gegenstände (21, 22) von den Elementen (41) des Spiegels entfernt werden.
e) Der letztere zurückgezogen wird.
f) Die Gegenstände (21, 22) derart gegeneinandergepreßt werden, daß die heißen Lippen während einer ausreichenden Zeit für das Verschweißen in Kontakt kommen und bis zur Rückkehr des geschmolzenen Materials in die feste Phase.
g) Der auf diese Weise erhaltene Zusammenbau (61) entnommen wird.

5. Verfahren zum Verschweißen von hohlen Gegenständen (21, 22) aus Kunststoff nach Anspruch 4, **dadurch gekennzeichnet, daß** man zwischen die Schritte a) und b) einen Arbeitsgang zur Dimensionierung der zu verschweißenden Gegenstände (21, 22) einschaltet, um die Schweißlippen in eine bessere Entsprechung zu bringen.

6. Verfahren nach Anspruch 5, **dadurch gekennzeichnet, daß** die Dimensionierung die nachfolgenden vier Schritte aufweist:
1.) Zumindest zwei Elemente (58) des Spiegels, deren Temperatur kleiner als zur Bewirkung einer lokalen Fusion des Kunststoffmaterials der in Kontakt mit den Elementen des Spiegels ("kalter" Spiegel) stehenden Lippen ist, werden auf gesonderte Weise bewegt und zwischen die einander gegenüberliegenden zu verschweißenden Lippen jedes Gegenstandes (21, 22) eingebracht.
2.) Die Gegenstände (21, 22) werden auf die zwei Seiten des Elementes (58) des kalten Spiegels mit einem Druck und einer ausreichenden Zeit angepreßt, um das Profil der zu verschweißenden Lippen zu verformen und ihre beiderseitige Entsprechung besser einzustellen,
3.) Die Gegenstände (21, 22) werden von den Elementen (58) des kalten Spiegels entfernt,
4.) Die Elemente (58) des kalten Spiegels werden zurückgezogen.

7. Verfahren nach Anspruch 6, **dadurch gekennzeichnet, daß** die Elemente (58) des kalten Spiegels und die Elemente (59) des heißen Spiegels gesonderte Zonen der gleichen Elemente (41) des Spiegels sind.

8. Verfahren nach Anspruch 5, **dadurch gekennzeichnet, daß** die Dimensionierung durch Ziehen oder Drücken der Flanken der zu verschweißenden Gegenstände (21, 22) oder durch Anpressen der Gegenstände an die Wände (60) einer als Schablone dienenden Form durchgeführt wird.

9. Verfahren nach einem der Ansprüche 4 bis 8, **dadurch gekennzeichnet, daß** man zumindest zwei hohle Gegenstände (21, 22) aus eingespritztem Kunststoff verschweißt, um einen Treibstofftank (61) zu erzeugen.

10. Anwendung der Vorrichtung nach einem der Ansprüche 1 bis 3 zum Herstellen von Treibstofftanks (61) aus Kunststoff durch Verschweißen zumindest zweier hohler Gegenstände (21, 22) aus eingespritztem Kunststoff.

## Claims

1. Machine for welding hollow plastic articles (21), (22) in order to produce at least one assembly (61) using the hot-plate technique, comprising a plate and means for heating this plate, means (6), (7), (23), (24), (25), (27), (28), (29), (50), (51), (52), (56), (57) for holding and positioning the articles to be welded together face to face so as to be able to bring the weld lips together, which weld lips correspond to the surface of each article, means (42), (43), (44), (45) for moving the plate between the weld lips and means (28), (29) pressing the articles (21), (22) against the plate, **characterized in that** the plate has from 3 to 8 separate elements (41) which are intended for heating only one portion of the weld lips of the articles (21), (22) and which can be moved separately.

2. Welding machine according to Claim 1, **characterized in that** the separate elements (41) which make up the plate are located in an adjacent manner and cover all of the weld lips of the articles when the plate is in the position for heating these lips.

3. Welding machine according to Claim 1, **characterized in that** at least one of the plate elements (41) is not plane.

4. Process for welding hollow plastic articles (21), (22) in a welding cycle in which:
a) at the start of the cycle, at least two articles (21), (22) to be welded together are positioned so as to present their weld lips face to face;
b) from 3 to 8 hot-plate elements (41) are moved separately and brought between the weld lips of each article (21), (22) which are placed opposite each other, the temperature of the plate elements being sufficient to be able to melt, by contact, the plastic to be welded;
c) the articles are pressed against the two faces of the hot-plate elements (41) for a time at least sufficient to start to melt the articles on the surface of the lips in contact with the hot-plates;
d) the articles (21), (22) are moved away from the plate elements (41);
e) the plate elements are withdrawn;
f) the articles (21), (22) are pressed against each other so as to bring the heated lips into contact for the time necessary for welding and for returning the molten material to the solid phase; and
g) the assembly (61) thus obtained is removed.

5. Process for welding hollow plastic articles (21), (22) according to Claim 4, **characterized in that** an operation of shaping the articles (21), (22) to be welded together is inserted between steps a) and b), for the purpose of achieving better correspondence of the weld lips.

6. Process according to Claim 5, **characterized in that** the shaping comprises the following four steps:
1°) at least two plate elements (58), the temperature of which is below that required to cause local melting of the plastic of the lips in contact with the plate elements ("cold" plate), are moved separately and brought between the weld lips of each article which are placed opposite each other;
2°) the articles (21), (22) are pressed against the cold-plate elements with a pressure and for a time which are necessary for deforming the profile of the weld lips and to better adjust their correspondence;
3°) the articles (21), (22) are moved away from the cold-plate elements (58), and
4°) the cold-plate elements (58) are withdrawn.

7. Process according to Claim 6, **characterized in that** the cold-plate elements (58) and the hot-plate elements (59) are separate regions of the same plate elements (41).

8. Process according to Claim 5, **characterized in that** the shaping is accomplished by stretching or compressing the side walls of the articles (21), (22) to be welded together or by pressing these articles against the walls (60) of a mould serving as a template.

9. Process according to any one of Claims 4 to 8, **characterized in that** at least two injection-moulded hollow plastic articles (21), (22) are welded together in order to manufacture a fuel tank (61).

10. Use of the machine according to any one of Claims 1 to 3 for manufacturing plastic fuel tanks (61) by welding at least two injection-moulded hollow plastic articles (21), (22) together.
